# FASCICULE DE BREVET EUROPEEN

(11) **EP 1 137 530 B1**
(45) Date de publication et mention de la délivrance du brevet: **01.12.2004**
(21) Numéro de dépôt: 99969060.5
(22) Date de dépôt: 13.09.1999
(51) Int. Cl.: B29D 30/00, B66C 1/54

(54) **DISPOSITIF DE SUSPENSION A AXE VERTIVAL DE CARCASSES DE PNEUMATIQUE**
GERÄT MIT VERTIKALER ACHSE ZUM HALTEN EINER REIFENKARKASSE
TYRE CASING HOLDING DEVICE WITH VERTICAL AXIS

(30) Priorité: 14.09.1998 FR 9811466
(43) Date de publication de la demande: 04.10.2001
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: GUIDE, Jean-Pierre, F-63130 Royat (FR)
(74) Mandataire: Cohen, Sylvia
(86) Numéro de dépôt international: PCT/EP1999/006749
(87) Numéro de publication internationale: WO 2000/015421

(56) Documents cités:
- EP-A- 0 162 686
- CH-A- 419 510
- FR-A- 2 271 920
- US-A- 1 577 664
- US-A- 3 337 173
- US-A- 3 393 807
- US-A- 3 759 394
- US-A- 4 236 883
- US-A- 4 452 655
- US-A- 4 608 219
- US-A- 5 395 150

## Description

La présente invention a pour objet un dispositif de suspension de carcasses de pneumatiques ; plus précisément, l'invention concerne un dispositif de suspension pour le transport des carcasses crues au cours de la fabrication des pneumatiques, en conservant leur axe vertical pendant le transport. Dans la suite, on désignera ce type de suspension par l'expression « suspension verticale ».

On sait que la fabrication actuelle des pneumatiques à carcasse radiale peut s'effectuer en plusieurs étapes : tout d'abord, sur une machine dite « de confection », on construit la carcasse proprement dite à partir de tringles et d'un cylindre de gommés crues que l'on conforme pour le rendre toroïdal; puis sur une machine dite « de finition », on applique sur cette carcasse une armature de sommet cylindrique, ou ceinture, et une bande de roulement; enfin, on vulcanise l'ensemble dans un moule.

Dans ce mode de fabrication, entre les deux premières étapes, il faut transporter la carcasse crue de la machine de confection à la machine de finition, dans un état où elle est très déformable. Autrefois, on accrochait les carcasses à des potences, l'axe des carcasses étant horizontal, mais, sous l'effet de leur propre poids, elles se déformaient en ovale ; ensuite, on a posé les carcasses à plat, mais avec l'augmentation de la masse des pneumatiques, on a constaté l'affaissement du flanc supérieur.

On a donc imaginé des dispositifs pour éviter ces déformations. Ainsi le brevet US 4 452 655 décrit un moyen de support d'une carcasse de pneumatique crue comprenant deux bourrelets, avec son axe vertical. Ce moyen de support de forme elliptique comprend quatre plaques verticales capables d'accepter une certaine flexion élastique leur permettant de s'engager sous le bourrelet supérieur pour soulever la carcasse, les plaques étant réparties sur les deux petits arcs de l'ellipse.

Le maintien de la carcasse sur le support est ainsi réalisé par l'appui des plaques sur ladite carcasse en dessous du bourrelet supérieur, la carcasse s'opposant à une extension radiale des plaques. Les forces de poussée qui s'exercent sur la carcasse, irrégulièrement réparties sur la circonférence de la carcasse du fait de la forme elliptique du moyen de support, risquent de provoquer des déformations de la carcasse.

Enfin, l'opération de déchargement de la carcasse est compliquée, et ne peut pas être automatisée. En effet, il faut déplacer la carcasse transversalement et la basculer pour dégager un de ses côtés, puis la ramener en sens contraire pour dégager l'autre côté et libérer ainsi cette carcasse tout entière.

Le brevet US 3 393 807 décrit un autre dispositif comportant des bras articulés disposant de patins de support en forme de "L" adaptés au soutien du bourrelet d'un bandage de forme toroïdale. Les bras sont rappelés en position repliée par un ressort.

La présente invention vise à pallier l'ensemble de ces inconvénients.

Pour ce faire, l'invention propose un dispositif de suspension sensiblement verticale de carcasses de pneumatiques tel que défini dans la revendication 1.

Un tel agencement permet l'insertion, en fonction des positions angulaires des surfaces d'appuis et donc de la distance radiale entre les surfaces opposées, de supporter des carcasses selon toute une panoplie de dimensions. Il n'y a pas à changer de support, ou autre élément. Le passage d'une dimension à une autre se fait donc très rapidement et avec la plus grande aisance.

De manière avantageuse, les supports et les surfaces d'appui sont agencés de façon à ce que, en prenant pour repère l'orientation des forces de gravité, les points de contact entre la carcasse à suspendre et les supports sont situés au-dessus des axes de rotation des supports. Ainsi, si une force quelconque tend à entraîner la carcasse vers le bas, grâce à la position relative du point de pivot, l'action de la force tend à écarter les supports, ce qui fait augmenter la force de maintien de ceux-ci. Cela permet par exemple de minimiser le risque de chute accidentelle.

Une butée susceptible de délimiter la position axiale de la carcasse à suspendre, de façon à ce que les surfaces d'appui exercent leur effort de serrage sensiblement au niveau de bourrelet supérieur de la carcasse est avantageusement disposée de façon à agir dans le cheminement normal de la carcasse à insérer.

De manière avantageuse, les supports comprennent une seconde partie en forme de came, servant à commander le positionnement des surfaces d'appui. Il est ainsi possible de commander le positionnement des supports de façon automatique ou semi-automatique.

Selon une forme d'exécution avantageuse de l'invention, il est prévu un dispositif de suspension sensiblement verticale de carcasses de pneumatiques, comprenant plusieurs supports articulés montés sur un plateau de manutention comportant un axe longitudinal (XX') autour duquel sont répartis lés supports, ceux-ci étant susceptibles de prendre appui à l'intérieur d'une carcasse de pneumatique, les supports étant agencés de façon à pouvoir faire varier le positionnement radial des surfaces d'appui en fonction du diamètre de la carcasse à suspendre.

De manière avantageuse, chacun des supports comporte une première partie incurvée, la surface d'appui s'étendant circonférentiellement sur une portion convexe de cette partie, de façon à offrir, en fonction de la position angulaire des supports, une gamme de positions radiales extrêmes des surfaces d'appui correspondant à une gamme dimensionnelle de diamètres de carcasses à suspendre.

Cette disposition permet au dispositif de suspension d'être multidimensionnel, en effet, en fonction de la dimension de la carcasse à suspendre le positionnement de la surface d'appui varie le long du côté convexe, et donc radialement.

De manière avantageuse, on prévoit également un rapprochement simultané des bras, qui permet d'atteindre une position escamotée des bras dans laquelle ces derniers ne sont plus au contact de la carcasse, ce qui autorise un déchargement aisé et simple de ladite carcasse.

Selon une variante avantageuse, chaque support comprend une première et une deuxième partie, chaque axe de rotation étant monté entre lesdites première et deuxième partie. La première partie de chaque support est incurvée et porte sur son côté convexe la surface d'appui.

Selon une caractéristique avantageuse de l'invention, les moyens d'actionnement comprennent :
- un premier organe commandant le mouvement de rotation de tous les supports simultanément dans le sens d'un rapprochement des surfaces d'appui de l'axe vertical, et constitué par un plateau mobile monté coulissant autour de l'axe vertical et portant des talons coopérant respectivement avec la deuxième partie de chaque support en exerçant une poussée verticale sur ces derniers,
- et des deuxièmes organes commandant le mouvement de rotation des supports dans le sens inverse et constitués par des ressorts montés respectivement sur les axes de rotation des supports.

Le déplacement du plateau mobile qui permet par son action de poussée sur les supports d'autoriser le déchargement de la carcasse, est actionné manuellement au moyen d'une tringle ou automatiquement à distance au moyen d'un vérin de commande.

D'autres caractéristiques et avantages de l'invention apparaîtront à la lecture de deux exemple de réalisation de dispositif de suspension de carcasses de pneumatique conformes à l'invention, donnés à titre non limitatif, en se référant au dessin annexé sur lequel :
- la figure 1 est une double vue en coupe verticale montrant deux modes de réalisation du dispositif dans deux positions différentes,

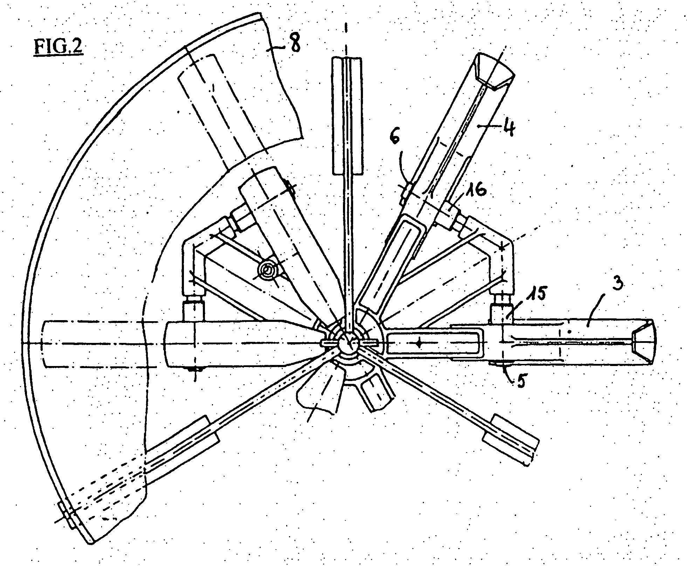

- la figure 2 est une vue de dessus, partiellement écorchée, des dispositifs représentés sur la figure 1,
- les figures 3A à 3D sont des représentations schématiques des opérations d'accrochage et de décrochage d'une carcasse, pour le mode manuel de réalisation de l'invention représenté sur la figure 1.

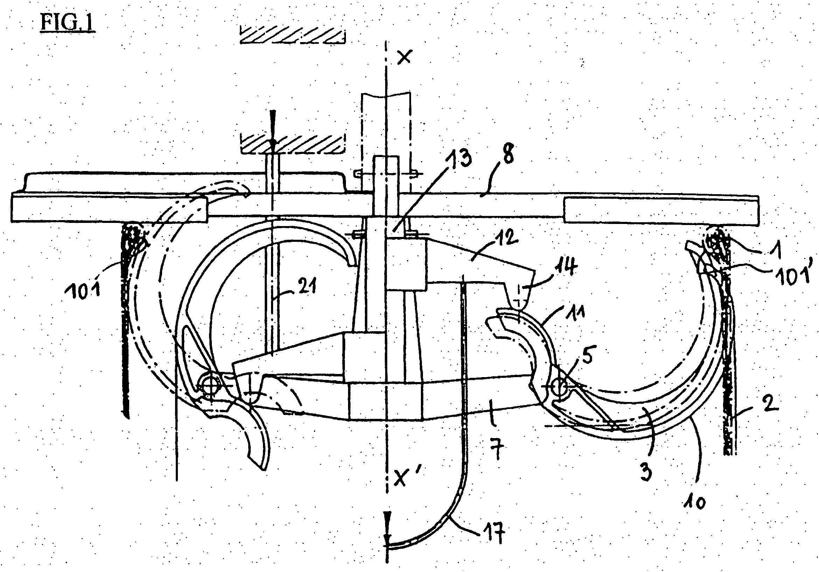

Sur la moitié droite de la figure 1, on a représenté un premier mode de réalisation de l'invention : on voit le bourrelet supérieur 1 d'une carcasse de pneumatique crue 2 dont l'axe de symétrie XX' est vertical. A l'intérieur de cette carcasse sont déployés six supports tournés vers lé haut et répartis autour de l'axe XX', tels que 3 et 4. Suivant l'invention, ces supports sont articulés autour d'axes horizontaux tels que 5 et 6, montés sur un plateau de manutention 7 fixé horizontalement sous une potence qui comporte une plaque de butée 8 et qui fait partie d'un convoyeur de typé connu, non représenté.

Chaque support, tel que 3 ou 4, est constitué d'une pièce rigide incurvée en S dont la première partie principale convexe, telle que 10, prend appui sur l'intérieur de la carcasse 2 au niveau d'une surface d'appui, tandis que la deuxième partie, telle que 11, plus réduite, est incurvée en sens contraire, l'axe dé rotation, tel que 5 ou 6, étant monté sensiblement au point d'inflexion entre les deux parties.

La convexité de la partie principale 10 permet de faire varier le positionnement radial de la surface d'appui en fonction de la dimension de la carcasse et donc d'avoir un dispositif de suspension multidimensionnel. En effet, sur la partie gauche de la figure 1 la carcasse représentée a un diamètre plus faible que celui de la carcasse représentée sur la droite de la figure et on voit clairement que la surface d'appui 101 (à gauche de la figure 1) n'est pas située au même niveau de la partie convexe de la surface d'appui 101' (à droite de la figure 1). Par contre, dans les deux cas, ces surfaces d'appui 101, 101' exercent un effort sensiblement au même endroit des carcasses respectives c'est-à-dire au niveau de leur bourrelet supérieur, grâce notamment à la plaque de butée 8 limitant la position axiale de la carcasse, comme on le verra dans la suite de la description.

Suivant l'invention, le dispositif de suspension comporte un plateau mobile verticalement 12, par exemple coulissant sur un tube axial 13, muni de talons, tels que 14, susceptibles de pousser simultanément sur les parties 11 des supports 3, 4.

La convexité de la partie plus réduite 11 permet de limiter l'encombrement du dispositif en formant une came qui transforme le déplacement en translation du plateau mobile 12 en pivotement des supports 3, 4 de façon démultipliée. Bien entendu, on peut également choisir d'autres formes pour réaliser la partie réduite 11.

Chaque support 3 ou 4 est muni d'un ressort de rappel, par exemple un ressort de torsion tel que 15 ou 16, monté autour de l'axe de rotation 5 ou 6, afin de mettre le support en position d'accrochage de la carcasse.

Enfin, une tringle verticale 17 solidaire du plateau mobile 12 permet de tirer manuellement ce dernier vers le bas pour décrocher la carcasse.

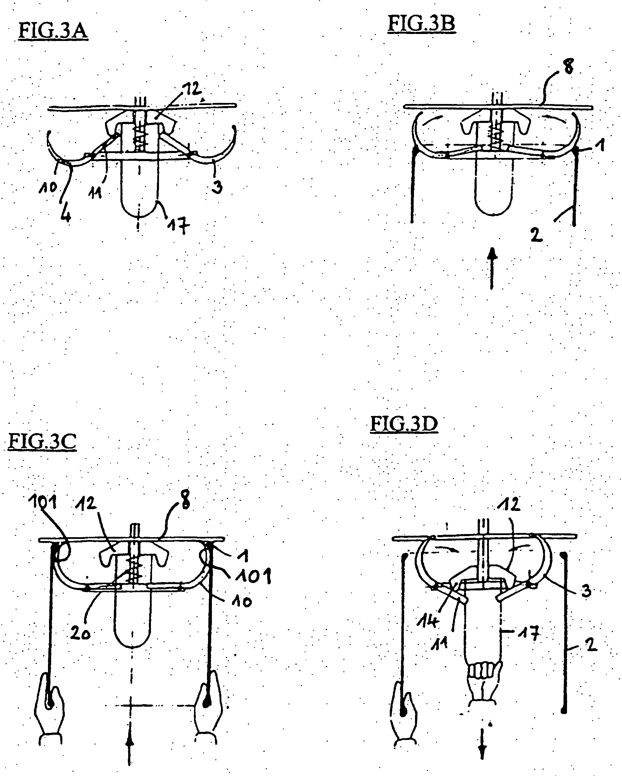

En se référant aux figures 3A, B, C, et D, sur lesquelles la partie 11 des supports a été représentée sous une forme plane, on va maintenant expliquer le fonctionnement du dispositif, objet de l'invention.

Sur la figure 3A, le dispositif est en position d'attente : il n'y a pas de carcasse, la tige 17 est libre, les ressorts de rappel maintiennent les supports tels que 3, 4 écartés.

Sur la figure 3B, une carcasse 2 est présentée verticalement sous le dispositif ; au fur et à mesure qu'elle monte, son bourrelet supérieur 1 repousse les supports 3, 4 qui se rabattent vers l'axe de symétrie en s'opposant aux forces des ressorts de rappel. La montée axiale de la carcasse est limitée, comme on le voit clairement, par la plaque de butée 8.

Sur la figure 3C, le bourrelet supérieur 1 est passé au-dessus de la partie convexe 10 des supports 3, 4 et en butée sur la plaque de butée 8, et les ressorts de rappel tendent à appliquer les supports à l'intérieur de la carcasse 2. Le bourrelet supérieur de la carcasse passe au-dessus du point de contact avec chaque partie convexe 10. Notons que ces points de contact sont au- dessus des axes de rotation 5, 6 des supports 3, 4.
Une fois que l'on relâche la carcasse, le poids de cette dernière tend à aider le serrage réalisé.

Sur la figure 3D, on a représenté le décrochage de la carcasse : en tirant la tringle 17 vers le bas, on fait descendre le plateau mobile 12 dont les talons 14 appuient sur les parties 11 des supports 3, 4 faisant basculer et se rapprocher les surfaces d'appui 101 des parties convexes 10 vers l'axe de symétrie, ce qui a pour effet de libérer la carcasse 2.

On remarque sur ces figures 3 un ressort 20 qui peut soulever le plateau mobile 12 en l'absence d'autre sollicitation : cela dégage les parties 11 des supports 3, 4 qui peuvent ainsi basculer plus librement vers l'extérieur sous l'effet des ressorts de rappel, ou éventuellement sous le seul effet du poids des parties 10 et ne pas ajouter d'effort supplémentaire à celui dû au poids des carcasses.

En revenant à la figure 1, on voit sur la moitié gauche un autre mode de réalisation de l'invention dans lequel l'action de la tringle 17 est remplacée par celle d'un vérin pneumatique 21; ce vérin peut être actionné à distance, ce qui permet d'automatiser sans difficulté les opérations de transfert des carcasses crues, qui viennent d'être décrites. Un tel vérin peut être fixe au poste de déchargement des carcasses, le convoyeur déplaçant alors les plateaux de manutention 7 devant celui-ci.

D'autre part, on remarque sur la figure 1 que les carcasses représentées sur les deux moitiés de la figure n'ont pas le même diamètre, alors que les différentes parties du dispositif de suspension sont identiques ( à l'exception de la commande du mouvement du plateau mobile 12 ) ; cela illustre l'un des avantages de l'invention, à savoir la possibilité d'utiliser le même dispositif pour toute une gamme de dimensions de pneumatiques : dans l'exemple décrit, on peut l'utiliser pour des dimensions de 12 à 16 pouces.

## Revendications

1. Dispositif pour la suspension sensiblement verticale d'une carcasse de pneumatique, comprenant un plateau de manutention (7) fixé horizontalement sous une potence, comportant un axe longitudinal (XX') autour duquel sont répartis des supports (3, 4) montés à rotation sur ledit plateau de manutention (7) autour d'axes perpendiculaires à l'axe XX', la position angulaire des supports pouvant varier entre une position écartée et une position correspondant au rabattement des supports vers l'axe XX', lesdits supports étant susceptibles de prendre appui à l'intérieur de la carcasse de pneumatique (2), **caractérisé en ce que** chacun des supports (3, 4) comprend une surface d'appui de forme convexe (101, 101'), lesdites surfaces d'appuis étant agencées de telle façon que l'engagement axial de la carcasse provoque le rabattement desdits supports vers l'axe XX' de sorte que lorsque la carcasse est en position et en prenant pour repère l'orientation des forces de gravité, les points de contact entre les surfaces d'appui (101, 101') et la partie intérieure de la carcasse (2) soient situés au dessus des axes de rotation (5, 6) des supports (3, 4).

2. Dispositif de suspension selon la revendication 1 dans lequel chaque support est muni d'un ressort de torsion (15, 16) monté sur l'axe de rotation (5, 6) destiné à s'opposer au rabattement des supports vers l'axe XX'.

3. Dispositif de suspension selon l'une des revendications 1, comprenant également une butée (8) susceptible de délimiter la position axiale de la carcasse à suspendre (2).

4. Dispositif de suspension selon l'une des revendications précédentes, dans lequel les supports (3, 4) comprennent une seconde partie (11) en forme de came, servant à commander le positionnement des surfaces d'appui (101, 101').

5. Dispositif de suspension selon la revendication 4, dans lequel la seconde partie (11) est incurvée en sens inverse par rapport à la première partie (10) de sorte que chaque support (3, 4) est incurvé en forme de S, chaque axe de rotation (5, 6) étant sensiblement monté au point d'inflexion entre les deux parties (10, 11).

6. Dispositif de suspension selon l'une des revendications 4 ou 5, dans lequel la seconde partie (11) du support (3, 4) est de dimension réduite par rapport à la première (10).

7. Dispositif de suspension selon l'une des revendications 4 ou 5, dans lequel la convexité de la partie la plus réduite (11) est configurée pour former une came susceptible de transformer le déplacement en translation sensiblement parallèle à l'axe longitudinal (X'X) d'un plateau mobile (12) en pivotement des supports (3, 4).

8. Dispositif de suspension selon l'une des revendications précédentes, comprenant des moyens d'actionnement (17, 21) commandant les mouvements de rotation des supports (3, 4) autour d'axes de rotation (5, 6) de manière à les écarter de l'axe (XX') ou à les en rapprocher sensiblement simultanément.

## Patentansprüche

1. Vorrichtung zur im wesentlichen senkrechten Aufhängung einer Luftreifenkarkasse, die ein Montagegestell (7) aufweist, das waagrecht unter einem Ausleger befestigt ist, mit einer Längsachse (XX'), um die herum Träger (3, 4) verteilt sind, die um zur Achse XX' senkrechte Achsen drehbar am Montagegestell (7) befestigt sind, wobei die Winkelstellung der Träger zwischen einer Abstandsstellung und einer Stellung variieren kann, die dem Umbiegen der Träger zur Achse XX' entspricht, wobei die Träger im Inneren der Luftreifenkarkasse (2) aufliegen können, **dadurch gekennzeichnet, dass** jeder der Träger (3, 4) eine Auflagefläche von konvexer Form (101, 101') aufweist, wobei die Auflageflächen so gestaltet sind, dass das axiale Einsetzen der Karkasse das Umbiegen der Träger zur Achse XX' bewirkt, so dass, wenn die Karkasse in Stellung ist, und wenn man als Bezugspunkt die Ausrichtung der Schwerkraft nimmt, die Kontaktpunkte zwischen den Auflageflächen (101, 101') und dem Innenbereich der Karkasse (2) sich über den Drehachsen (5, 6) der Träger (3, 4) befinden.

2. Aufhängevorrichtung nach Anspruch 1, bei der jeder Träger mit einer Drehfeder (15, 16) versehen ist, die auf die Drehachse (5, 6) montiert und dazu bestimmt ist, sich dem Umbiegen der Träger zur Achse XX' zu widersetzen.

3. Aufhängevorrichtung nach einem der Ansprüche 1, die weiter einen Anschlag (8) aufweist, der die axiale Stellung der aufzuhängenden Karkasse (2) begrenzen kann.

4. Aufhängevorrichtung nach einem der vorhergehenden Ansprüche, bei der die Träger (3, 4) einen zweiten Bereich (11) in Form einer Nocke aufweisen, der dazu dient, die Positionierung der Auflageflächen (101, 101') zu steuern.

5. Aufhängevorrichtung nach Anspruch 4, bei der der zweite Bereich (11) bezüglich des ersten Bereichs (10) in umgekehrter Richtung gekrümmt ist, so dass jeder Träger (3, 4) S-förmig gekrümmt ist, wobei jede Drehachse (5, 6) im wesentlichen am Biegepunkt zwischen den beiden Bereichen (10, 11) angeordnet ist.

6. Aufhängevorrichtung nach einem der Ansprüche 4 oder 5, bei der der zweite Bereich (11) des Trägers (3, 4) bezüglich des ersten Bereichs (10) eine kleinere Abmessung aufweist.

7. Aufhängevorrichtung nach einem der Ansprüche 4 oder 5, bei der die konvexe Form des kleineren Bereichs (11) gestaltet ist, um eine Nocke zu bilden, die die Translationsverschiebung einer beweglichen Platte (12) im wesentlichen parallel zur Längsachse (XX') in ein Schwenken der Träger (3, 4) umwandeln kann.

8. Aufhängevorrichtung nach einem der vorhergehenden Ansprüche, die Betätigungsmittel (17, 21) aufweist, welche die Drehbewegungen der Träger (3, 4) um Drehachsen (5, 6) derart steuern, dass sie im wesentlichen gleichzeitig von der Achse (XX') entfernt oder ihr angenähert werden.

## Claims

1. A device for the substantially vertical suspension of a tyre carcass, comprising a handling plate (7) fixed horizontally beneath a bracket, comprising a longitudinal axis (XX') around which are distributed supports (3, 4) mounted to rotate on said handling plate (7) about axes perpendicular to the axis XX', the angular position of the supports being able to vary between a spread-apart position and a position corresponding to the folding of the supports towards the axis XX', said supports being able to bear on the inside of the tyre carcass (2), **characterised in that** each of the supports (3, 4) comprises a convex bearing surface (101, 101'), said bearing surfaces being arranged such that the axial engagement of the carcass causes said supports to be folded towards the axis XX' such that when the carcass is in position and taking as a reference the orientation of the forces of gravity, the points of contact between the bearing surfaces (101, 101') and the lower part of the carcass (2) are located above the axes of rotation (5, 6) of the supports (3, 4).

2. A suspension device according to Claim 1, in which each support is provided with a torsion spring (15, 16) mounted on the axis of rotation (5, 6) intended to oppose the folding of the supports towards the axis XX'.

3. A suspension device according to one of Claims 1 [sic], also comprising a stop (8) able to define the axial position of the carcass (2) to be suspended.

4. A suspension device according to one of the preceding claims, in which the supports (3, 4) comprise a second, cam-shaped, part (11), which serves to control the positioning of the bearing surfaces (101, 101').

5. A suspension device according to Claim 4, in which the second part (11) is curved in the opposite direction to the first part (10), such that each support (3, 4) is curved in an S-shape, each axis of rotation (5, 6) being mounted substantially at the point of inflection between the two parts (10, 11).

6. A suspension device according to one of Claims 4 or 5, in which the second part (11) of the support (3, 4) is of smaller dimension than the first (10).

7. A suspension device according to one of Claims 4 or 5, in which the convexity of the smaller part (11) is configured to form a cam able to transform the translational displacement substantially parallel to the longitudinal axis (XX') of a movable plate (12) into pivoting of the supports (3, 4).

8. A suspension device according to one of the preceding claims, comprising actuating means (17, 21) controlling the rotational movement of the supports (3, 4) about axes of rotation (5, 6) so as to move them away from the axis (XX') or to bring them towards it substantially simultaneously.
